(19)

**Europäisches Patentamt**
**European Patent Office**
**Office européen des brevets**

(11) **EP 4 481 079 A1**

(12) **EUROPEAN PATENT APPLICATION**
published in accordance with Art. 153(4) EPC

(43) Date of publication:
25.12.2024 Bulletin 2024/52

(51) International Patent Classification (IPC):
*C22C 21/10* (2006.01)    *C22F 1/00* (2006.01)
*C22F 1/053* (2006.01)

(21) Application number: 23788136.2

(22) Date of filing: 22.03.2023

(52) Cooperative Patent Classification (CPC):
C22C 21/10; C22F 1/00; C22F 1/053

(86) International application number:
PCT/JP2023/011276

(87) International publication number:
WO 2023/199716 (19.10.2023 Gazette 2023/42)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.04.2022 JP 2022065347

(71) Applicant: KABUSHIKI KAISHA KOBE SEIKO
SHO (KOBE STEEL, LTD.)
Hyogo 651-8585 (JP)

(72) Inventors:
• FUKUDA, Hiroaki
  Yamaguchi, 752-0953 (JP)
• SHIKAMA, Takahiro
  Yamaguchi, 752-0953 (JP)
• YOSHIHARA, Shinji
  Yamaguchi, 752-0953 (JP)

(74) Representative: Müller-Boré & Partner
Patentanwälte PartG mbB
Friedenheimer Brücke 21
80639 München (DE)

(54) **AUTOMOBILE DOOR BEAM AND METHOD FOR MANUFACTURING SAME**

(57)    An automobile door beam made of a 7000 series aluminum alloy extruded material, including: Zn: 7.5 to 9.0 mass%, Mg: 1.5 to 2.0 mass%, Cu: 0.1 to 0.7 mass%, Si: 0.15 mass% or less (including 0 mass%), Fe: 0.3 mass% or less (including 0 mass%), Ti: 0.2 mass% or less (not including 0 mass%), and one or more of Mn, Cr, and Zr: 0.10 to 0.50 mass% in total within a range of Mn: 0.30 mass% or less (not including 0 mass%), Cr: 0.25 mass% or less (not including 0 mass%), and Zr: 0.25 mass% or less (not including 0 mass%), with the balance being Al and inevitable impurities, wherein the automobile door beam includes a bonding portion to be subjected to mastic bonding, and contents of Mg and Al at a surface of the bonding portion satisfy Formula (1) shown below:

$$[Mg]/[Al] \leq 10.0 \quad (1)$$

wherein [Mg] and [Al] indicate the contents of Mg and Al at the surface of the bonding portion expressed in mass%, respectively.

**FIG. 1**

EP 4 481 079 A1

# EP 4 481 079 A1

**Description**

TECHNICAL FIELD

The present disclosure relates to an automobile door beam made of a 7000 series aluminum alloy extruded material and a method for manufacturing the same.

BACKGROUND ART

An automobile door beam is attached to the inside of a door in a front-rear direction to protect the occupant from lateral collision of a vehicle body. This door beam is required to have impact absorption resistance performance, and for example, regulations such as FMVSS (Federal Motor Vehicle Safety Standards) provide certain standards for the maximum load value and the energy absorption amount obtained by a three-point bending test of the door beam.
A 7000 series (Al-Zn-Mg-based) high-strength aluminum alloy extruded material is used as a material of a door beam for the purpose of achieving both higher impact absorption resistance performance and lighter weight of an automobile component. Patent Document 1 discloses a door beam made of a 7000 series aluminum alloy extruded material having excellent stress corrosion cracking resistance (SCC resistance) in a higher strength region (proof strength of 460 MPa or more) than before as a material of an automobile door beam. The door beam of Patent Document 1 exhibits high strength (proof strength of 460 MPa or more) after an artificial aging treatment by using a 7000 series aluminum alloy extruded material with higher concentrations of Zn and Mg.

PRIOR ART DOCUMENTS

PATENT DOCUMENTS

Patent Document 1: JP-A-2020-164893

SUMMARY OF THE INVENTION

PROBLEMS TO BE SOLVED BY THE INVENTION

When an automobile door beam is fixed to an automobile outer panel, a mastic adhesive which is an elastic adhesive is used. When an automobile door beam using a 7000 series aluminum alloy extruded material with higher concentrations of Zn and Mg is bonded to an outer panel with a mastic adhesive, a phenomenon in which adhesive force is reduced may occur.
An object of an embodiment of the present invention is to provide an automobile door beam made of a 7000 series aluminum alloy extruded material with higher concentrations of Zn and Mg, achieving an improved adhesive force (mastic adhesiveness) between the door beam and a mastic adhesive. An object of another embodiment of the present invention is to provide a method for manufacturing an automobile door beam with improved mastic adhesiveness.

SOLUTIONS TO THE PROBLEMS

A first aspect of the present invention is
an automobile door beam made of a 7000 series aluminum alloy extruded material, the automobile door beam including:

Zn: 7.5 to 9.0 mass%,
Mg: 1.5 to 2.0 mass%,
Cu: 0.1 to 0.7 mass%,
Si: 0.15 mass% or less (including 0 mass%),
Fe: 0.3 mass% or less (including 0 mass%),
Ti: 0.2 mass% or less (not including 0 mass%), and
one or more of Mn, Cr, and Zr: 0.10 to 0.50 mass% in total within a range of Mn: 0.30 mass% or less (not including 0 mass%), Cr: 0.25 mass% or less (not including 0 mass%), and Zr: 0.25 mass% or less (not including 0 mass%), with the balance being Al and inevitable impurities,
wherein the automobile door beam includes a bonding portion to be subjected to mastic bonding, and contents of Mg and Al at a surface of the bonding portion satisfy Formula (1) shown below:

$$[\text{Mg}]/[\text{Al}] \leq 10.0 \quad (1)$$

wherein [Mg] and [Al] indicate the contents of Mg and Al at the surface of the bonding portion expressed in mass%, respectively.

A second aspect of the present invention is

the automobile door beam according to the first aspect, wherein contents of Mg and Zn satisfy Formulas (2) and (3) shown below:

$$C_{\text{Zn}} - 5.38 \times C_{\text{Mg}} \leq 1.0 \quad (2)$$

$$C_{\text{Mg}} - 0.186 \times C_{\text{Zn}} \leq 0.5 \quad (3)$$

wherein $C_{\text{Zn}}$ and $C_{\text{Mg}}$ are the contents of Zn and Mg expressed in mass%, respectively.

A third aspect of the present invention is

a method for manufacturing the automobile door beam of the first or second aspect,
the method including: treating the surface of the bonding portion of the automobile door beam to be subjected to mastic bonding such that the contents of Mg and Al at the surface of the bonding portion satisfy Formula (1) shown below:

$$[\text{Mg}]/[\text{Al}] \leq 10.0 \quad (1)$$

wherein [Mg] and [Al] indicate the contents of Mg and Al at the surface of the bonding portion expressed in mass%, respectively.

A fourth aspect of the present invention is
the method for manufacturing the automobile door beam according to the third aspect, wherein the treating the surface of the bonding portion includes removing at least a part of an Mg-concentrated layer of the surface by polishing the surface.
A fifth aspect of the present invention is
the method for manufacturing the automobile door beam according to the third aspect, wherein the treating the surface of the bonding portion includes removing at least a part of an Mg-concentrated layer of the surface by a chemical treatment.

EFFECTS OF THE INVENTION

An embodiment of the present invention can provide an automobile door beam made of a 7000 series aluminum alloy extruded material with higher concentrations of Zn and Mg, wherein the mastic adhesiveness has improved. Another embodiment of the present invention can provide a method for manufacturing an automobile door beam with improved mastic adhesiveness.

BRIEF DESCRIPTION OF THE DRAWINGS

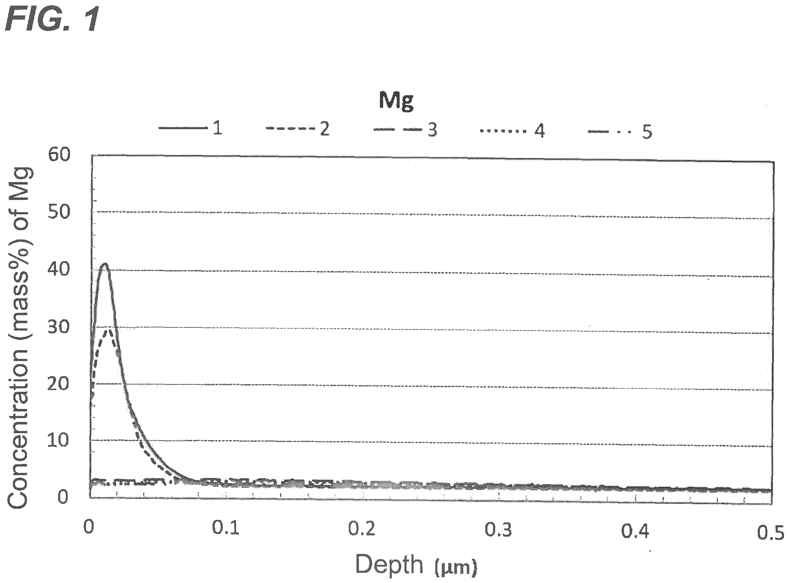

Fig. 1 shows a graph showing the Mg concentrations in a depth direction from a surface of samples prepared in Examples.

DETAILED DESCRIPTION

The inventors of the present invention have intensively studied a phenomenon of a decrease in mastic adhesiveness of an automobile door beam made of a 7000 series aluminum alloy extruded material with higher concentrations of Mg and Zn. As a result, it has been found for the first time that the Mg concentration of the surface of the aluminum extruded material is increased, and the mastic adhesiveness decreases when the Mg concentration is equal to or more than a predetermined value. Herein, a portion having a higher Mg concentration in the surface of the aluminum extruded material (surface layer portion having a Mg concentration higher than the Mg concentration in the aluminum extruded material) may be referred to as "Mg-concentrated layer".
In the conventional 7000 series aluminum, no Mg-concentrated layer was formed, or the Mg concentration of the Mg-concentrated layer was equal to or less than a predetermined value, and thus a decrease in mastic adhesiveness was not confirmed. However, in a 7000 series aluminum with higher concentrations of Mg and Zn, it is considered that the Mg concentration of the Mg-concentrated layer exceeds a predetermined value, and thus the mastic adhesiveness has decreased.

The inventors of the present invention have completed the present invention based on the finding that it is effective to reduce the Mg concentration of the surface of a portion (bonding portion) to be subjected to mastic bonding in order to enhance the mastic adhesiveness of an automobile door beam made of a 7000 series aluminum extruded material with higher concentrations of Mg and Zn.

The Mg concentration inside the Mg-concentrated layer usually tends to be higher in the vicinity of the surface and decreases toward the inside of the extruded material. Thus, to reduce the Mg concentration of the surface of the bonding portion to a value equal to or less than a predetermined value, it is effective to remove at least a part of the Mg-concentrated layer of the surface of the bonding portion. Here, "removing at least a part of the Mg-concentrated layer" means removing at least a part of the thickness of the Mg-concentrated layer to reduce the thickness of the Mg-concentrated layer. The Mg-concentrated layer may partially remain. Preferably, the Mg-concentrated layer is fully removed.

Improving the mastic adhesiveness makes it possible to effectively suppress peeling of the bonding portion of the door beam even when the automobile is placed in a severe environment (for example, in a high-temperature and wet environment).

Hereinafter, an automobile door beam (hereinafter, simply referred to as "door beam") according to an embodiment of the present invention will be described more specifically.

[Component Composition]

A 7000 series aluminum alloy extruded material used as a material of a door beam has a composition of:

Zn: 7.5 to 9.0 mass%,
Mg: 1.5 to 2.0 mass%,
Cu: 0.1 to 0.7 mass%,
Si: 0.15 mass% or less (including 0 mass%),
Fe: 0.3 mass% or less (including 0 mass%),
Ti: 0.2 mass% or less (not including 0 mass%), and
one or more of Mn, Cr, and Zr: 0.10 to 0.50 mass% in total within a range of Mn: 0.30 mass% or less (not including 0 mass%), Cr: 0.25 mass% or less (not including 0 mass%), and Zr: 0.25 mass% or less (not including 0 mass%), with the balance being Al and inevitable impurities. In this composition, the concentrations (contents) of Zn and Mg are higher than those of the conventional 7000 series aluminum alloy extruded material.

Individual elements contained in the 7000 series aluminum alloy extruded material will be described.

Zn:

Zn forms $MgZn_2$ together with Mg to improve the strength of the 7000 series aluminum alloy extruded material. To exhibit the effect of improving the strength, the Zn content is required to be 7.5 mass% or more. On the other hand, when the Zn content is more than 9.0 mass%, a decrease in SCC resistance cannot be suppressed. Thus, the Zn content is within a range of 7.5 to 9.0 mass%. The lower limit value of the Zn content is more preferably 7.7 mass%, still more preferably 8.0 mass%, particularly preferably 8.1 mass%, and the upper limit value is preferably 8.8 mass%.

Mg:

Mg forms $MgZn_2$ together with Zn and improves the strength of the 7000 series aluminum alloy extruded material. To exhibit the effect of improving the strength, the Mg content is required to be 1.5 mass% or more. On the other hand, when the Mg content is more than 2.0 mass%, a decrease in SCC resistance cannot be suppressed, and the extrudability deteriorates due to an increase in deformation resistance. Thus, the Mg content is within a range of 1.5 to 2.0 mass%. The lower limit value of the Mg content is preferably 1.6 mass%, and the upper limit value is preferably 1.8 mass%.

Relationship between contents of Mg and Zn:

The contents of Mg and Zn preferably satisfy the following relationship.

The stoichiometric ratio (mass ratio) between Mg and Zn constituting $MgZn_2$ is 1 : 5.38. Assuming that the Zn content (mass%) of the 7000 series aluminum alloy extruded material is $C_{Zn}$ and the Mg content (mass%) is $C_{Mg}$, $C_{Zn}$ =

$5.38 \times C_{Mg}$ holds when Zn and Mg are present in a stoichiometric ratio. On the other hand, when Zn is present in excess of the stoichiometric ratio, $C_{Zn} > 5.38 \times C_{Mg}$ holds, and the amount of excess Zn ($E_{Zn}$) at this time is calculated as $E_{Zn} = C_{Zn} - 5.38 \times C_{Mg}$. When Mg is present in excess of the stoichiometric ratio, $C_{Zn} < 5.38 \times C_{Mg}$ holds, and the amount of excess Mg ($E_{Mg}$) at this time is calculated as $E_{Mg} = C_{Mg} - 0.186 \times C_{Zn}$.

When the amount of excess Zn ($E_{Zn}$) is large, a large amount of Zn not forming $MgZn_2$ is present in the alloy, and the SCC resistance of the extruded material decreases. On the other hand, when the amount of excess Mg ($E_{Mg}$) is large, a large amount of Mg not forming $MgZn_2$ is present in the alloy, and the extrudability decreases due to an increase in deformation resistance. From the above viewpoints, in the 7000 series aluminum alloy extruded material, the contents of Zn and Mg are preferably close to the stoichiometric ratio, and more specifically, the amount of excess Zn ($E_{Zn} = C_{Zn} - 5.38 \times C_{Mg}$) is preferably 1.0 mass% or less, and the amount of excess Mg ($E_{Mg} = C_{Mg} - 0.186 \times C_{Zn}$) is preferably 0.5 mass% or less. That is, the contents of Mg and Zn preferably satisfy the following Formulas (2) and (3).

$$C_{Zn} - 5.38 \times C_{Mg} \leq 1.0 \qquad (2)$$

$$C_{Mg} - 0.186 \times C_{Zn} \leq 0.5 \qquad (3)$$

wherein $C_{Zn}$ and $C_{Mg}$ are the contents of Zn and Mg expressed in mass%, respectively.

The left side of Formula (2) is a calculation formula of the amount of excess Zn ($E_{Zn}$), and the left side of Formula (3) is a calculation formula of the amount of excess Mg ($E_{Mg}$). When the value on the left side ($E_{Zn}$) of Formula (2) is negative and the value on the left side ($E_{Mg}$) of Formula (3) is positive, this indicates that Mg is excessive in the component composition. In reverse, when the value on the left side ($E_{Zn}$) of Formula (2) is positive and the value on the left side ($E_{Mg}$) of Formula (3) is negative, this indicates that Zn is excessive in the component composition.

The amount of excess Zn ($E_{Zn}$) is more preferably 0.5 mass% or less, still more preferably 0.3 mass% or less. The amount of excess Mg ($E_{Mg}$) is more preferably 0.4 mass% or less, still more preferably 0.3 mass% or less.

Cu:

Cu forms a solid solution in grain boundary precipitates ($MgZn_2$), thereby reducing a potential difference between the grain boundary precipitates and PFZ (precipitation-free zone), and suppressing preferential dissolution of the grain boundary precipitates under a corrosive environment, which improves the SCC resistance of the 7000 series aluminum alloy extruded material. Cu also improves the strength of the 7000 series aluminum alloy extruded material. However, when the Cu content is less than 0.1 mass%, the above action is insufficient. On the other hand, when the Cu content is more than 0.7 mass%, the SCC resistance decreases conversely, the extrudability deteriorates due to an increase in deformation resistance, and the weld cracking property of the extruded material also deteriorates. Thus, the Cu content is in the range of 0.1 to 0.7 mass%. The lower limit value of the Cu content is preferably 0.2 mass%, and the upper limit value is preferably 0.5 mass%.

Ti:

Ti has an action of refining crystal grains during casting of the 7000 series aluminum alloy. On the other hand, when the content is more than 0.2 mass%, the action thereof is saturated, and a coarse intermetallic compound crystallizes out to deteriorate the moldability of the extruded material. Thus, the Ti content is 0.2 mass% or less (not including 0 mass%). The lower limit value of the Ti content is preferably 0.005 mass%, and the upper limit value is preferably 0.05 mass%.

Mn, Cr, and Zr:

Mn, Cr, and Zr precipitate as fine dispersed particles in aluminum through homogenization treatment, have an effect of suppressing recrystallization, and have an effect of improving SCC resistance by suppressing recrystallization, and one or more thereof are added in a total amount of 0.10 mass% or more. As one or more of Mn, Cr, and Zr, (1) only one of the three elements, (2) a combination of two of the three elements (Mn and Cr, Mn and Zr, or Cr and Zr), or (3) a combination of all the three elements can be considered, and any one of the above (1) to (3) can be selected. However, when the contents of Mn, Cr, and Zr are more than 0.30 mass%, more than 0.25 mass%, and more than 0.25 mass%, respectively, or the total content of one or more thereof is more than 0.50 mass%, the extrudability deteriorates, and the quenching sensitivity of the extrusion material is sharpened. Thus, the content of one or more of Mn, Cr, and Zr is within a range of 0.10 to 0.50 mass% in total within a range of Mn: 0.30 mass% or less (not including 0 mass%), Cr: 0.25 mass% or less (not including 0 mass%), and Zr: 0.25 mass% or less (not including 0 mass%).

Among them, Zr has a smaller effect of sharpening the quenching sensitivity of the 7000 series aluminum alloy extruded material than Mn and Cr, and thus it is preferable to preferentially add Zr in a range of 0.10 to 0.25 mass% and complementarily add Mn and/or Cr as necessary. A preferable lower limit value of the Zr content is 0.12 mass%, a more preferable lower limit value is 0.14 mass%, a preferable upper limit value is 0.23 mass%, and a more preferable upper limit value is 0.20 mass%. A preferable upper limit value of the Cr content is 0.10 mass%, and a more preferable upper limit value is 0.06 mass%. A preferable upper limit value of the Mg content is 0.10 mass%, and a more preferable upper limit value is 0.06 mass%.

Si:

A small amount of Si is mixed in the 7000 series aluminum alloy. Si forms $Mg_2Si$ together with Mg and precipitates at a grain boundary. When the Si content is more than 0.15 mass%, $Mg_2Si$ is excessively formed and Mg is consumed, which causes insufficient strength of the extruded material. When the Si content is more than 0.15 mass%, seizure is likely to occur at the surface of the extruded material, which deteriorates the extrudability. Thus, the Si content is 0.15 mass% or less (lower limit value is 0 mass%).

Fe:

A small amount of Fe is mixed in the 7000 series aluminum alloy as an impurity. Fe forms an intermetallic compound with other elements in the alloy during casting, and forms a crystallized product (Fe-based crystallized product) in the ingot. Herein, the Fe-based crystallized product is a generic term for Fe-containing crystallized products (intermetallic compounds) such as Al-Fe-based, Al-Fe-Si-based, Al-Mn-Fe-based, Al-Fe-Mn-Si-based, and Al-Cr-Fe-based crystallized products. The Fe-based crystallized product generated in the ingot is present without disappearing in the material (extruded material) after extrusion.

When a large amount of the Fe-based crystallized product is crystallized, the toughness of the 7000 series aluminum alloy extruded material decreases. Thus, the Fe content is 0.3 mass% or less (lower limit value is 0 mass%). A preferable upper limit value of the Fe content is 0.15 mass%. By limiting the Fe content, the Fe-based crystallized products are reduced, and an effect of suppressing pitting corrosion caused by the Fe-based crystallized products can also be expected.

Balance:

In one preferred embodiment, the balance is Al and inevitable impurities. When the 7000 series aluminum alloy is cast, impurities are inevitably mixed from various paths such as bare metal and an intermediate alloy of an additive element in addition to Si and Fe which are main impurities. Mixing of these inevitable impurities is also allowed based on the JIS standard or the like of the 7000 series aluminum alloy as long as the effect of the present invention is not impaired. For example, Si and Fe are usually preferred as the content is smaller, and thus are inevitable impurities, but there are elements whose composition range are separately specified as described above. Herein, the term "inevitable impurities" constituting the balance is a concept excluding elements whose composition ranges are separately specified.

Regarding the inevitable impurities, the content of individual elements is preferably 0.05 mass% or less, and the total content is 0.15 mass% or less. B among the impurities is mixed in the aluminum alloy in an amount of about 1/5 of the Ti content as Ti is added, but the content is preferably 0.02 mass% or less and more preferably 0.01 mass% or less.

Content ratio between Mg and Al on surface of bonding portion:

In the automobile door beam according to the embodiment of the present invention, the ratio of the Mg content to the Al content at the surface of the portion to be subjected to mastic bonding (this portion is referred to as "bonding portion") is 10.0 or less. That is, the contents of Mg and Al at the surface of the bonding portion preferably satisfy the following Formula (1).

$$[Mg]/[Al] \leq 10.0 \qquad (1)$$

wherein [Mg] and [Al] indicate the contents of Mg and Al at the surface of the bonding portion expressed in mass%, respectively.

Lowering the Mg concentration (Mg content) of the surface of the bonding portion so as to satisfy Formula (1) makes it possible to improve the mastic adhesiveness of the bonding portion. The reason of the improvement of the mastic adhesiveness when the Mg concentration of the surface of the bonding portion decreases is not clear, but it is presumed as follows.

In the evaluation of the mastic adhesiveness, the adhesiveness is evaluated in a wet environment in order to verify the adhesiveness under severe conditions. When the Mg concentration of the surface of the bonding portion is high, the hydration reaction of Mg at the surface easily proceeds under a wet environment. As a result, it is presumed that the adhesive force between the surface of the bonding portion and the mastic adhesive is reduced, and the mastic adhesiveness is likely to decrease.

By setting [Mg]/[Al] to 10.0 or less, the hydration reaction at the surface of the bonding portion is suppressed, and excellent mastic adhesiveness can be achieved. [Mg]/ [Al] is preferably 8.0 or less, and more preferably 7.2 or less.

Since the door beam according to the embodiment of the present invention has an increased Mg content, the Mg concentration (Mg content) of the surface (including the surface of the bonding portion) of the door beam increases, and [Mg]/[Al] may exceed 10.0. The Mg concentration of the surface of the door beam is usually higher in the vicinity of the surface and decreases toward the inside of the door beam. Thus, as described later, the surface of the bonding portion is treated by polishing or the like to remove at least a part of the Mg-concentrated layer formed at the surface. This can set [Mg]/[Al] of the bonding portion to 10.0 or less.

The contents of Mg and Al at the surface of the bonding portion can be measured by GDOS (glow discharge optical emission spectrometer), AES (Auger electron spectroscopy), or the like on the surface of the bonding portion.

As a method for measuring the contents of Mg and Al at the surface of the bonding portion after the automobile door beam is incorporated into an automobile, there is a method of measuring the concentrations (contents) of Mg and Al at the surface of the bonding portion by the above-described analysis methods after the mastic bonding is removed from the bonding portion. The method for removing the mastic bonding may be either physical removal such as cutting or polishing, or chemical removal for dissolving the mastic adhesive.

As another measurement method, there is a method in which the door beam is cut at a section passing through the bonding portion in a state where the adhesive is attached to the bonding portion, and the section is analyzed by an EDX apparatus attached to a SEM (scanning electron microscope) or a TEM (transmission electron microscope) to measure the concentrations (contents) of Mg and Al at the surface position of the bonding portion.

[Manufacturing Method]

A method for manufacturing an automobile door beam includes: treating a surface of a bonding portion of an automobile door beam to be subjected to mastic bonding such that the contents of Mg and Al at the surface of the bonding portion satisfy the following Formula (1).

$$[Mg]/[Al] \leq 10.0 \qquad (1)$$

wherein [Mg] and [Al] indicate the contents of Mg and Al at the surface of the bonding portion expressed in mass%, respectively.

In the treating the surface of the bonding portion, a method of removing at least a part of the Mg-concentrated layer of the surface by polishing the surface may be used (removal by polishing). As a polishing method, any polishing method may be used as long as at least a part of the Mg-concentrated layer of the surface of the bonding portion can be removed. For example, a polishing material such as sandpaper or a polishing sponge may be fixed to a polishing apparatus such as a hand grinder or a hand sander to polish the surface of the bonding portion.

As for the removal amount of the surface of the bonding portion, the surface of the bonding portion of the door beam is analyzed before polishing, and the removal amount can be determined from the measurement result. For example, the surface of the bonding portion of the door beam to be actually polished and removed may be subjected to elemental analysis in a depth direction, the depth at which [Mg]/[Al] is 10.0 or less may be examined, and the depth may be used as the removal amount (removal depth). Alternatively, the removal amount (removal depth) may be determined by performing preliminary measurement using a sample of an aluminum alloy extruded material having the same component composition as that of the door beam and performing elemental analysis on the sample surface in the depth direction.

In the case of removal by polishing using a polishing apparatus, the removal amount can be adjusted by the load at the time of polishing and the polishing time.

Alternatively, in the treating the surface of the bonding portion, a method of removing the Mg-concentrated layer of the surface by chemical treatment may be used (chemical removal). The chemical treatment includes applying a treatment solution (for example, an acidic aqueous solution) capable of dissolving and removing the Mg-concentrated layer to the surface of the bonding portion. As a method for applying the treatment solution, for example, the surface of the bonding portion is immersed in the treatment solution, or the treatment solution is applied to the surface of the bonding portion.

The removal amount (removal depth) of the surface of the bonding portion can be determined using the above-described method.

In the case of chemical removal, the removal amount can be adjusted by the type and concentration of the treatment solution to be used and the time to apply the treatment solution.

In the treating the surface of the bonding portion, only a part of the Mg-concentrated layer (for example, the vicinity of the surface having a particularly high Mg concentration,) may be removed, or the Mg-concentrated layer may be fully removed.

The method for manufacturing an automobile door beam may further include any one or more of: casting an aluminum alloy billet having a predetermined component composition, extruding the aluminum alloy billet into the shape of an automobile door beam, and homogenizing the extruded automobile door beam.

For the casting the aluminum alloy billet and the extruding the aluminum alloy billet, a method known in the technical field can be applied.

[Examples]

A 7000 series aluminum alloy billet having a diameter of 194 mm obtained by semi-continuous casting was subjected to a soaking treatment, then reheated to 480°C, and extruded at a predetermined extrusion rate (8.5 m/min for alloy species A and 10 m/min for alloy species B). Immediately after the extrusion, the extruded material was fan air-cooled to produce a 7000 series aluminum alloy extruded material (Nos. 1 to 5). The sectional shape of each extruded material was a section for an automobile door beam (a section of type II with an inner flange having a width of 40 mm), and after the extruded material was cooled to room temperature, an aging treatment (T5) was performed at 90°C for 3 hours and at 140°C for 8 hours.

Extruded materials of Sample Nos. 1 to 5 were prepared, and the following measurement was performed. Sample Nos. 1 and 3 to 5 were formed from alloy species A, and sample No. 2 was formed from alloy species B. Sample Nos. 1 and 2 were not subjected to surface polishing, and sample Nos. 3 to 5 were subjected to surface polishing described later.

The component compositions of the alloy species A and B are shown in Table 1. In both the alloy species A and B, Mg was present in excess of the stoichiometric ratio. The alloy species A had $E_{Mg}$ = 0.019 (mass%), and the alloy species B had $E_{Mg}$ = 0.191 (mass%).

(Surface Polishing)

The surface of the extruded material of the alloy species A was polished using an orbital sander (hand sander) (manufactured by Kovacs) to which Scotch Bright Industrial Pad 7447 #320 (manufactured by 3M Company) was attached. The load was constant at 5 kg, and the polishing time was set to three stages of 3 seconds, 5 seconds, and 10 seconds, for Nos. 3 to 5, respectively (see Table 2).

(Tensile Test)

From the central part in a width direction of each of the extruded materials of Nos. 1 and 2, a JIS13B tensile test piece was taken by machining from the inner flange such that the longitudinal direction was parallel to the extrusion direction. Two test pieces were collected for each extruded material. Using these test pieces, a tensile test was conducted in accordance with the provision of JIS Z 2241:2011, and the proof strength (0.2%), the tensile strength, and the elongation were measured. The crosshead speed was 5.0 mm/min until reaching the proof strength value, and then set to 10.0 mm/min. The proof strength values of Nos. 1 and 2 described in Table 2 were average values of the proof strength values measured for two test pieces. The measurement results are shown in Table 2.

Since Nos. 1 and 3 to 5 use the same alloy species, it is presumed that the proof strength, tensile strength, and elongation of Nos. 3 to 5 are similar to those of No. 1.

(Concentration Analysis)

For Nos. 1 to 5, the concentrations (contents) of Mg and Al at the sample surface were measured.

Quantification of the concentrations of Mg and Al was continuously performed in the depth direction from the sample surface position using GD-OES analysis. In the GD-OES analysis, the contents of O, Mg, Al, Si, Cu, Zn, and Zr were measured. The "Mg concentration" and the "Al concentration" refer to the contents of Mg and Al when the measured total content of all elements is 100 mass%.

Before the measurement, the surface of the sample was wiped with ethanol to remove the polishing powder. The measurement results of the Mg concentration are shown in Fig. 1. The horizontal axis represents the depth ($\mu$m) from the surface, and the vertical axis represents the concentration (mass%) of Mg. The reference numerals 1 to 5 in the graph correspond to Nos. 1 to 5 in Examples. The graphs labeled by numerals 1 and 2 have a peak in the range of a depth of 0 to 0.1 μm, from which it was found that a Mg-concentrated layer was present at the surface.

The measurement results of the Mg concentration and the Al concentration and the value of [Mg]/[Al] calculated from these numerical values are shown in Table 3.

(Mastic Evaluation)

Two test materials having 25 mm in width × 150 mm in length × 3.7 mm in thickness were prepared. A range of 25 mm in width × about 25 to about 30 mm in length in the vicinity of one end of each test material was defined as the bonding portion. A thermosetting epoxy resin-based adhesive as a mastic adhesive was applied to the bonding portion of one test material, and the bonding portion of the other test material was superimposed thereon. At this time, the two test materials were stacked such that the other ends (grip parts at the time of the tensile test) of the two test materials were opposite to each other. Thereafter, the adhesive was dried, heated, and thermally cured. An adhesion test body was thus obtained in which the bonding portions of the two test materials were bonded with an adhesive layer.

After the prepared adhesion test body was held in a wet environment, the other ends (grip parts) of the two test materials were clamped by a tensile tester used in a strength test of JIS Z 2241:2011, and a tensile test was performed. In the tensile test, the adhesive layer of the adhesion test body was pulled until it was broken or peeled off and separated into two test materials.

The bonding portions of the two separated test materials were visually checked, and the destruction form of the adhesive layer was evaluated. In the case of the whole surface cohesive failure (the mastic adhesive layer was internally broken), it was determined that the adhesive strength at the interface between the mastic adhesive layer and the test material was high (excellent mastic adhesiveness), and it was evaluated as pass (○). On the other hand, when even a slight interfacial peeling (peeling occurred at the interface between the mastic adhesive layer and the test material) occurred, it was determined that the mastic adhesiveness was not sufficient, and it was evaluated as fail (×).

[Table 1]

| Alloy species | Component composition (mass%): balance is Al and inevitable impurities | | | | | | | | | Left side of Formula (2) ($E_{Zn}$) | Left side of Formula (3) ($E_{Mg}$) |
|---|---|---|---|---|---|---|---|---|---|---|---|
| | Zn | Mg | Cu | Si | Fe | Ti | Mn | Cr | Zr | | |
| A | 8.5 | 1.6 | 0.30 | - | - | 0.025 | - | - | 0.17 | -0.108 | 0.019 |
| B | 6.5 | 1.4 | 0.15 | - | - | 0.025 | - | 0.03 | 0.15 | -1.032 | 0.191 |

[Table 2]

| Classification | No. | Alloy species | Proof strength (N/mm$^2$) | Tensile strength (N/mm$^2$) | Elongation (%) |
|---|---|---|---|---|---|
| Comparative Example | 1 | A | 500 | 536 | 12.8 |
| Reference Example | 2 | B | 455 | 486 | 11.8 |
| Invention Example | 3 | A | - | - | - |
| Invention Example | 4 | A | - | - | - |
| Invention Example | 5 | A | - | - | - |

[Table 3]

| Classification | No. | Alloy species | Surface polishing | | Bonding portion surface | | | Mastic adhesiveness (Wet conditions) |
|---|---|---|---|---|---|---|---|---|
| | | | Polishing time (seconds) | Load (Kg) | Mg concentration [Mg](mass%) | Al concentration [Al](mass%) | [Mg]/[Al] | |
| Comparative Example | 1 | A | - | - | 21.6 | 1.18 | 18.3 | × |
| Reference Example | 2 | B | - | - | 15.5 | 2.16 | 7.2 | ○ |

(continued)

| Classification | No. | Alloy species | Surface polishing | | Bonding portion surface | | | Mastic adhesiveness (Wet conditions) |
|---|---|---|---|---|---|---|---|---|
| | | | Polishing time (seconds) | Load (Kg) | Mg concentration [Mg](mass%) | Al concentration [Al](mass%) | [Mg]/[Al] | |
| Invention Example | 3 | A | 3 | 5 | 2.30 | 12.9 | 0.18 | ○ |
| Invention Example | 4 | A | 5 | | 1.72 | 12.7 | 0.14 | ○ |
| Invention Example | 5 | A | 10 | | 1.79 | 13.5 | 0.13 | ○ |

As shown in Table 3, in No. 1 (Comparative Example), since surface polishing was not performed, a Mg-concentrated layer was present at the sample surface (Fig. 1). Since the used alloy was the alloy species A having a high Mg content, [Mg]/[Al] at the surface of the bonding portion was 18.3, and the mastic adhesiveness was evaluated as fail.

In No. 2 (Reference Example), since surface polishing was not performed, a Mg-concentrated layer was present at the sample surface (Fig. 1). Since the used alloy was the alloy species B having a relatively small Mg content, [Mg]/[Al] at the surface of the bonding portion was 7.2, and the mastic adhesiveness was evaluated as pass.

In Nos. 3, 4, and 5 (Invention Examples), since the surface polishing was performed, the Mg-concentrated layer of the surface of the sample was fully removed (Fig. 1). [Mg]/[Al] at the surface of the bonding portion was extremely low as 1 or less. Thus, the mastic adhesiveness was evaluated as pass.

From the results of Nos. 1 and 2, it is presumed that when [Mg]/[Al] at the surface of the bonding portion is less than 18.3 (for example, 10.0 or less, in particular, 8.0 or less), excellent mastic adhesiveness can be obtained. It was also confirmed that excellent mastic adhesiveness was obtained when [Mg]/[Al] was 7.2.

From the results of Nos. 1 and 3 to 5, it has been found that when [Mg]/[Al] at the surface of the bonding portion exceeds 10.0, the mastic adhesiveness can be improved by removing the Mg-concentrated layer and setting [Mg]/[Al] to 10.0 or less.

This application claims priority based on Japanese Patent Application No. 2022-065347 filed on April 11, 2022. Japanese Patent Application No. 2022-065347 is incorporated herein by reference.

**Claims**

1. An automobile door beam made of a 7000 series aluminum alloy extruded material, the automobile door beam comprising:

   Zn: 7.5 to 9.0 mass%,
   Mg: 1.5 to 2.0 mass%,
   Cu: 0.1 to 0.7 mass%,
   Si: 0.15 mass% or less (including 0 mass%),
   Fe: 0.3 mass% or less (including 0 mass%),
   Ti: 0.2 mass% or less (not including 0 mass%), and
   one or more of Mn, Cr, and Zr: 0.10 to 0.50 mass% in total within a range of Mn: 0.30 mass% or less (not including 0 mass%), Cr: 0.25 mass% or less (not including 0 mass%), and Zr: 0.25 mass% or less (not including 0 mass%), with the balance being Al and inevitable impurities,
   wherein the automobile door beam includes a bonding portion to be subjected to mastic bonding, and contents of Mg and Al at a surface of the bonding portion satisfy Formula (1) shown below:

$$[Mg]/[Al] \leq 10.0 \qquad (1)$$

   wherein [Mg] and [Al] indicate the contents of Mg and Al at the surface of the bonding portion expressed in mass%, respectively.

2. The automobile door beam according to claim 1, wherein contents of Mg and Zn satisfy Formulas (2) and (3) shown below:

$$C_{Zn} - 5.38 \times C_{Mg} \leq 1.0 \quad (2)$$

$$C_{Mg} - 0.186 \times C_{Zn} \leq 0.5 \quad (3)$$

wherein $C_{Zn}$ and $C_{Mg}$ are the contents of Zn and Mg expressed in mass%, respectively.

3. A method for manufacturing the automobile door beam of claim 1 or 2,

the method comprising: treating the surface of the bonding portion of the automobile door beam to be subjected to mastic bonding such that the contents of Mg and Al at the surface of the bonding portion satisfy Formula (1) shown below:

$$[Mg]/[Al] \leq 10.0 \quad (1)$$

wherein [Mg] and [Al] indicate the contents of Mg and Al at the surface of the bonding portion expressed in mass%, respectively.

4. The method for manufacturing the automobile door beam according to claim 3, wherein the treating the surface of the bonding portion includes removing at least a part of an Mg-concentrated layer of the surface by polishing the surface.

5. The method for manufacturing the automobile door beam according to claim 3, wherein the treating the surface of the bonding portion includes removing at least a part of an Mg-concentrated layer of the surface by a chemical treatment.

FIG. 1

EP 4 481 079 A1

## INTERNATIONAL SEARCH REPORT

International application No.

**PCT/JP2023/011276**

### A. CLASSIFICATION OF SUBJECT MATTER

***C22C 21/10***(2006.01)i; ***C22F 1/00***(2006.01)i; ***C22F 1/053***(2006.01)i
FI: C22C21/10; C22F1/053; C22F1/00 602; C22F1/00 612; C22F1/00 630A; C22F1/00 691B; C22F1/00 691C; C22F1/00 694Z; C22F1/00 692Z; C22F1/00 630Z; C22F1/00 682; C22F1/00 683

According to International Patent Classification (IPC) or to both national classification and IPC

### B. FIELDS SEARCHED

Minimum documentation searched (classification system followed by classification symbols)

C22C21/10; C22F1/00; C22F1/053

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2019/159810 A1 (UACJ CORP) 22 August 2019 (2019-08-22) paragraphs [0001], [0054], [0059], table 1, alloy no. C | 1-5 |
| Y | JP 6-256881 A (NIPPON STEEL CORP) 13 September 1994 (1994-09-13) claim 1, paragraphs [0001], [0008], [0010], [0012], table 1, alloy no. A, B, table 2 | 1-5 |
| Y | JP 2020-164980 A (KOBE STEEL LTD) 08 October 2020 (2020-10-08) claim 1, paragraphs [0001]-[0002] | 1-5 |
| Y | JP 2020-505516 A (ARCONIC INC) 20 February 2020 (2020-02-20) paragraphs [0005], [0017], [0030] | 4 |
| A | JP 2011-11256 A (SUMITOMO LIGHT METAL IND LTD) 20 January 2011 (2011-01-20) entire text | 1-5 |
| A | JP 2010-279981 A (SUMITOMO LIGHT METAL IND LTD) 16 December 2010 (2010-12-16) entire text | 1-5 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 April 2023** | **09 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2023/011276** |

| Patent document cited in search report | | | Publication date (day/month/year) | Patent family member(s) | | | Publication date (day/month/year) |
| --- | --- | --- | --- | --- | --- | --- | --- |
| WO | 2019/159810 | A1 | 22 August 2019 | DE | 112019000856 | T5 | |
| JP | 6-256881 | A | 13 September 1994 | (Family: none) | | | |
| JP | 2020-164980 | A | 08 October 2020 | (Family: none) | | | |
| JP | 2020-505516 | A | 20 February 2020 | US paragraphs [0006], [0020], [0037] EP KR CN | 2019/0330750 3571329 10-2019-0091560 110177902 | A1 A1 A A | |
| JP | 2011-11256 | A | 20 January 2011 | US entire text EP | 2011/0236718 2439015 | A1 A1 | |
| JP | 2010-279981 | A | 16 December 2010 | (Family: none) | | | |

Form PCT/ISA/210 (patent family annex) (January 2015)

**REFERENCES CITED IN THE DESCRIPTION**

**Patent documents cited in the description**

- JP 2020164893 A

- JP 2022065347 A